Europäisches Patentamt

European Patent Office

Office européen des brevets

(11) Veröffentlichungsnummer: **0 411 454 A1**

# EUROPÄISCHE PATENTANMELDUNG

(21) Anmeldenummer: 90114235.6

(22) Anmeldetag: 25.07.90

(51) Int. Cl.⁵: **B01D 53/34**

(30) Priorität: 01.08.89 DE 3925424

(43) Veröffentlichungstag der Anmeldung:
06.02.91 Patentblatt 91/06

(84) Benannte Vertragsstaaten:
DE DK ES GB IT

(71) Anmelder: BASF Aktiengesellschaft
Carl-Bosch-Strasse 38
D-6700 Ludwigshafen(DE)

(72) Erfinder: Leutner, Bernd, Dr.
Taunusstrasse 17
D-6710 Frankenthal(DE)
Erfinder: Hoppe, Klaus-Dieter, Dr.
Mandelring 17
D-6706 Wachenheim(DE)
Erfinder: Bever, Paul, Dr.
R 4,3
D-6800 Manheim 1(DE)
Erfinder: Kraume, Matthias, Dr.
S 6,29-31
D-6800 Manheim 1(DE)

(54) Verfahren zur Verringerung der Oxidationsgeschwindigkeit von Sulfitlösungen.

(57) Zur Verringerung der Oxidationsraten von sulfit-/bisulfithaltigen Lösungen in Gasflüssigkeitswäschen zur $SO_2$-Abtrennung aus Gasen gibt man den Lösungen Oxidationsinhibitoren in einer Menge von 0,01 bis 20 mmol pro Stunde und pro Quadratmeter Stoffaustauschfläche zu. Diese Oxidationsinhibitoren können Polyaminoaromaten und/oder Polyhydroxyaromaten und/oder (Poly)amino(poly)hydroxiaromaten, Ascorbinsäure und/oder Dehydroascorbinsäure sein.

EP 0 411 454 A1

# VERFAHREN ZUR VERRINGERUNG DER OXIDATIONSGESCHWINDIGKEIT VON SULFITLÖSUNGEN

Vorliegende Erfindung betrifft ein Verfahren zur Verringerung der Oxidationsgeschwindigkeit von sulfithaltigen Lösungen, u. a. bei Rauchgasentschwefelungsanlagen, in Gegenwart von Oxidationsinhibitoren.

Zur Entfernung von Schwefeldioxid aus Gasen werden vielfach Naßwäschen eingesetzt. Diese enthalten unterschiedliche Chemikalien, die das $SO_2$ zu binden vermögen. Bei Rauchgasentschwefelungsanlagen von Kraftwerken wird zur $SO_2$-Bindung überwiegend Calciumhydroxid oder Calciumcarbonat eingesetzt. Die hierbei anfallenden Reaktionsprodukte, Calciumsulfit oder Calciumsulfat, müssen aus der Waschlösung abgetrennt werden. Die Vermarktung oder selbst die Deponie dieser Produkte hat sich wegen der großen anfallenden Mengen, die allein in der Bundesrepublik Deutschland auf jährlich über drei Millionen Tonnen/Jahr geschätzt werden, als außerordentlich problematisch herausgestellt.

zur Vermeidung derartiger Entsorgungsprobleme werden daher zur Rauchgasentschwefelung bei geeigneten Standortvoraussetzungen Verfahren herangezogen, bei denen die schwefeldioxidhaltigen Abgase mit wäßrigen Lösungen von Alkalisulfit gewaschen werden. Hierbei reagiert das Alkalisulfit mit dem gasförmigen Schwefeldioxid unter Bildung von Alkalihydrogensulfit. Das absorbierte Schwefeldioxid läßt sich durch einfaches thermisches Erhitzen der Alkalihydrogensulfitlösung unter Rückgewinnung von Alkalisulfit aus der Lösung austreiben. Das hierbei anfallende konzentrierte Schwefeldioxidgas wird zu verwertbaren Produkten wie Schwefelsäure aufgearbeitet.

Obwohl bei diesen Verfahren und ähnlichen, u. a. auf Magnesium- und Zinkoxid basierenden Verfahren im Gegensatz zu den eingangs erwähnten Waschverfahren auf der Basis von Calciumverbindungen keine Deponieprobleme auftreten sollten, haben sich im großtechnischen Einsatz Schwachstellen aufgezeigt. Im Zuge der Schwefeldioxidabsorption bilden sich nämlich in Nebenreaktionen beträchtliche Mengen an Sulfat. Die Sulfatbildung ist auf den in den zu reinigenden Abgasen vorhandenen Sauerstoff zurückzuführen, der sich mit den Sulfit- und Hydrogensulfitsalzen in unerwünschter Weise zu den korrespondierenden Sulfatsalzen umsetzt. Um daher eine störende Aufkonzentration von Alkalisulfat in der sulfithaltigen Waschlösung zu vermeiden, muß dieses Salz aus dem Absorptionskreislauf ausgeschleust werden. Es hat sich beim Betrieb der in jüngster zeit installierten Rauchgaswäschen gezeigt, daß die Oxidationsraten von Alkalisulfit zu Alkalisulfat, z.B. von Natriumsulfit zu Natriumsulfat, relativ hoch sind und daß das daher in größerer Menge anfallende Natriumsulfat als außerordentlich lästiges Nebenprodukt anzusehen ist.

Die durch den hohen Zwangsanfall an Natriumsulfat herbeigeführten Nachteile sind mehrfacher Art. Zum einen müssen die Apparate für die Ausschleusung der Natriumsulfatmengen entsprechend groß und damit kostenaufwendig ausgelegt werden. Zum anderen beinhaltet eine Ausschleusung von Natriumsulfat einen Verlust an verwertbarem Schwefeldioxid sowie an der als Rohstoff eingesetzten wertvollen Natronlauge. Als eine weitere Problematik erweist sich die Weiterverwendung von Natriumsulfat. Die Verkaufsmöglichkeiten bzw. die Erlösmöglichkeiten für Natriumsulfat gehen laufend zurück, so daß eine Vermarktung dieses Produktes zumindest in Mitteleuropa kaum mehr möglich erscheint. Eine Deponie des leicht wasserlöslichen Salzes ist weder aus Umweltschutzgründen noch aus wirtschaftlichen Gesichtspunkten zu vertreten.

Beim Einsatz von Magnesium- oder zinkoxiden bzw. deren in wäßriger Phase vorliegenden Reaktionsprodukten mit Wasser und den $SO_2$-haltigen Abgasen liegen die Probleme in der Regenerierung der entsprechenden Metallsulfate. So erfordert die bei einigen Rauchgasanlagen in den USA praktizierte Entschwefelung mittels Magnesiumoxid eine Abtrennung des gebildeten Magnesiumsulfats und eine nachfolgende aufwendige reduktive Spaltung des getrockneten Salzes mit Kohle oder Kohlenstoffverbindungen oberhalb von 500 °C.

Zur Verringerung der unerwünschten Sulfitoxidation sind verschiedene Methoden bekannt.

So können z.B. den sulfithaltigen Absorptionslösungen Komplexbildner zugesetzt werden. Die Komplexbildner vermögen die die Oxidation katalytisch beschleunigenden Schwermetalle zu maskieren und damit zu inaktivieren (vgl. C.A. Eckert et al., J. Phys. Chem. 1982, 86 , S. 4233-4237). Als Beispiele für Schwermetalle, welche die Sulfitoxidation besonders stark beschleunigen und schon bei Konzentrationen unterhalb von 1 ppm ihre Wirkung entfalten, seien Kobalt und Kupfer genannt. Die Zugabe von Komplexbildnern nutzt allerdings naturgemäß nur dann, wenn katalytisch wirkende Metalle in den Absorptionslösungen vorhanden sind. Fehlen diese praktisch, weil beispielsweise die Apparateteile der Rauchgasentschwefelungsanlagen überwiegend aus korrosionsresistenten Werkstoffen, z.B. aus Kunststoffen gefertigt sind, und ein Schwermetalleintrag über die Flugasche oder aus sonstigen Quellen kaum vorhanden ist, so zeitigt eine Komplexbildnerzugabe, wenn überhaupt, dann nur einen geringen Effekt.

Eine weitere Maßnahme, die Sulfatbildungsrate zu verringern, besteht in einem Zusatz von Oxidationsinhibitoren. Diese Möglichkeit zur Stabilisierung von Sulfitlösungen gegenüber der Oxidationswirkung von Luftsauerstoff ist seit langem bekannt. In der Literatur werden für diesen Zweck u. a. aromatische (Poly)-amine, aromatische (Poly)hydroxiverbindungen oder auch Polyalkohole genannt. Eine eingehende Aufzählung untersuchter und unterschiedlich wirksamer Inhibitoren findet sich in Gmelins Handbuch der Anorganischen Chemie, 8. Auflage, 1963, Systemnummer 9, Schwefel, Teil B - Lieferung 3, Seiten 1481 - 1501.

In der US-PS 3,888,969 werden als Oxidationsinhibitoren für wäßrige Natrium- und/oder Kaliumsulfit/-bisulfitlösungen spezielle substituierte Phenole beschrieben, die besser wirksam sein sollen als die zum Stand der Technik erwähnten Oxidationsinhibitoren wie Hydrochinon und dergleichen.

Gemäß der EP-PS 0 056 180 wird empfohlen, zur Verbesserung der Wirkung der zugesetzten Oxidationsinhibitoren außer diesen nach noch ein phosphorhaltiges wasserlösliches Toppingmittel zuzusetzen. Dieses Toppingmittel umfaßt Substanzen aus der Gruppe, bestehend aus Polyphosphatverbindungen, Organophosphorsäureverbindungen und Oligomeren dieser Verbindungen und deren Gemische. Diese Zusätze an Toppingmitteln sollen insbesondere dann wirksam sein, wenn die wäßrige Waschlösung Feststoffe enthält. z.B. Flugasche, was bei der Behandlung von Rauchgasen stets der Fall ist.

Die Wirkung der Oxidationsinhibitoren wird jedoch durch andere gasförmige, in den zu behandelnden Gasen enthaltenen Verbindungen stark beeinträchtigt, wenn nicht gar ganz zunichte gemacht. Als solche Verbindungen sind insbesondere Stickoxide zu nennen, die in Form von NO und $NO_2$ (im folgenden als $NO_x$ bezeichnet) stets in mehr oder weniger großen Mengen in den Rauchgasen von Feuerungsanlagen vorkommen. In einer eingehenden Studie der Firma Aerojet-general Corporation, El Monte, Kalifornien, "The Development of new and/or improved aqueous Processes for removing $SO_2$ from Flue Gases", Final Report, Volume II, Oktober 1970, wird hierüber berichtet und festgestellt, daß $NO_x$ und vor allem $NO_2$ mit die Hauptursache für die Sulfit-Oxidation darstellen (Seiten 7 und 12 der ziteirten Arbeit) und daß diese die Wirkung von Oxidationsinhibitoren total unterdrücken. Es wird festgetellt, daß lediglich bei Verwendung von Nitrilotriessigsäure als Oxidationsinhibitor die Oxidationsrate erniedrigt wird, dies allerdings nur in Sulfit/Bisulfitlösungen, deren pH-Wert 12,6 oder mehr beträgt. Dieser hohe pH-Wert ist jedoch für den praktischen Betrieb einer Rauchgaswäsche wegen der dann erfolgenden gleichzeitigen Absorption von Kohlendioxid nicht praktikabel.

Es ist bis jetzt daher noch kein Verfahren bekannt geworden, mit dem es gelingt, die Oxidationsrate von Sulfit/Bisulfit-Lösungen zu verringern, wenn in den zu behandelnden Abgasen auch $NO_x$ enthalten ist.

Der vorliegenden Erfindung lag daher die Aufgabe zugrunde, ein Verfahren zur Verringerung der Oxidationsraten von sulfit/bisulfithaltigen Lösungen in Gasflüssigkeitswäschen zur $SO_2$-Abtrennung aus Gasen unter Zugabe von Oxidationsinhibitoren bereitzustellen, bei dem die oben genannten Nachteile nicht auftreten und das inbesondere geeignet ist, die Oxidationsrate von Sulfit-/Hydrogensulfitlösungen bei der Behandlung von Gasen zu verringern, die neben $SO_2$ auch $NO_x$ enthalten.

Es wurde nun gefunden, daß diese Aufgabe dadurch gelöst werden kann, daß man der sulfit-/hydogensulfithaltigen Lösung pro Quadratmeter Stoffaustauschfläche zwischen Gas und Flüssigkeit und pro Stunde 0,01 bis 20 mmol Oxidationsinhibitoren zusetzt.

Der Oxidationsinhibitor wird der sulfit-/hydrogensulfithaltigen Lösung zweckmäßig in gelöster Form vor Eintritt in den Gas-/Flüssigkeitswäscher zugesetzt. Als Lösungsmittel wird, sofern der Oxidationsinhibitor wasserlöslich ist, vorzugsweise Wasser eingesetzt. Aber auch Alkohole können als Lösungsmittel, falls erforderlich, eingesetzt werden. Desgleichen können bei Einsatz von organischen Aminen zur Erhöhung der Löslichkeit Mineralsäuren, so z.B. Schwefelsäure, herangezogen werden. Um eine zu starke Verdünnung der Absorptionsflüssigkeit zu vermeiden, setzt man möglichst konzentrierte Inhibitorlösungen ein. Zweckmäßig fügt man den Oxidationsinhibitor der Absorptionslösung kontinuierlich oder in kurz aufeinanderfolgenden Intervallen zu, um eine möglichst gleichbleibende Konzentration des Oxidationsinhibitors in der Absorptionslösung zu erzielen. Dadurch soll eine möglichst konstante Wirkung des Oxidationsinhibitors sichergestellt werden.

Erfindungsgemäß wird der Sulfit-/Hydrogensulfitlösung 0,01 bis 20 mmol Oxidationsinhibitor pro Stunde pro Quadratmeter Stoffaustauschfläche zugesetzt. Unter Stoffaustauschfläche ist bei Füllkörperkolonnen die geometrische Oberfläche der Füllkörper zu verstehen. Bei Waschapparaten in denen das auszuwaschende Gas durch die Waschflüssigkeit in Form von Gas-blasen hindurchströmt, ist unter Stoffaustauschfläche die Phasengrenzfläche zwischen der Flüssigkeit und dem Gas zu verstehen.

Zur Ausschaltung einer Oxidationsbeschleunigung durch Metallspuren ist es vorteilhaft, den Waschflüssigkeiten Metallkomplexbildner, wie Polyaminopolycarbonsäuren oder Polyamino(poly)phosphonsäuren, zuzusetzen und zwar in einer molaren Konzentration, die mindestens der molaren Konzentration aller störenden Metallionen entspricht.

Die im Einzelfall zudosierende Oxidationsinhibitormenge hängt von dem $NO_x$-Gehalt des zu behandelnden Gases ab, der in der Regel bis zu 2000 Vol ppm betragen kann. Bei niedrigen $NO_x$-Gehalten setzt man den Oxidationsinhibitor im unteren Teil des o.g. Bereiches ein. Die zweckmäßig in Abhängigkeit von der

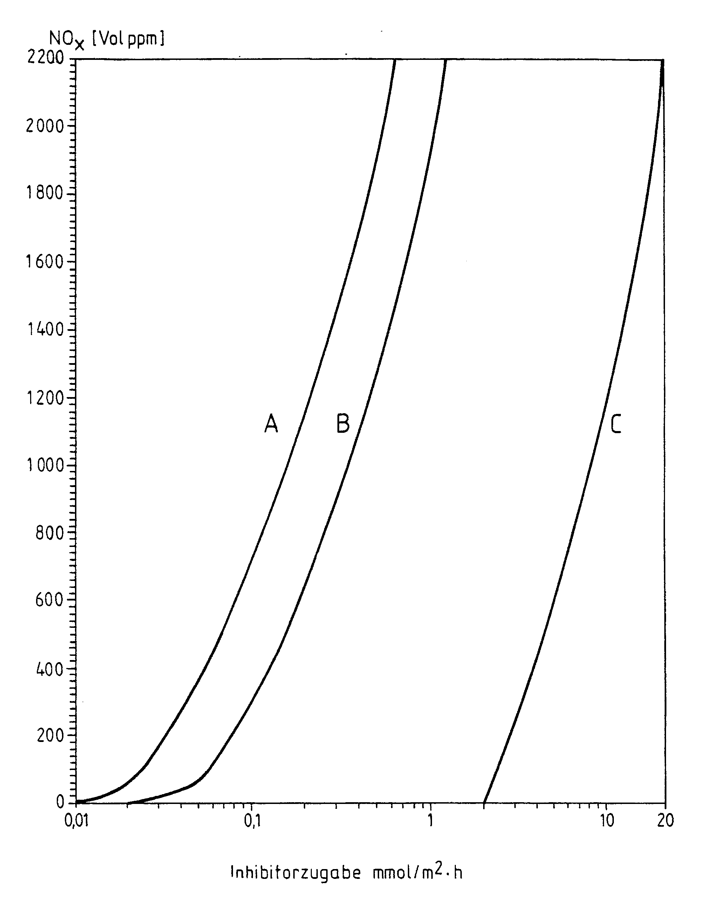

$NO_x$-Konzentration einzusetzende Inhibitormenge ergibt sich aus der graphischen Darstellung der Figur, in der auf der X-Achse die Abhängigkeit der zuzusetzenden Inhibitormenge in $mmol/m^2$ Stoffaustauschfläche•h und die $NO_x$-Konzentration im zu behandelnden Abgas in Vol ppm auf der Y-Achse aufgetragen ist. Die für eine bestimmte $NO_x$-Konzentration einzusetzende Inhibitormenge ergibt sich durch die Schnittpunkte einer durch die betreffende $NO_x$-Konzentration gelegten, zur X-Achse parallelen Geraden, mit den Kurven A und C, vorzugsweise durch die Schnittpunkte dieser Geraden mit den Kurven B und C definierten Bereiche.

Um den Verbrauch an Oxidationsinhibitor zu senken, ist es vorteilhaft, den $NO_x$-Gehalt des zu behandelnden Abgases vor der Behandlung des Abgases mit den Sulfit-/Hydrogensulfitlösungen zu senken.

Zur Herabsetzung der $NO_x$-Konzentration lassen sich alle bekannten Verfahren einsetzen. So kann durch Primärmaßnahmen bei der Feuerung, wie Senkung der Verbrennungstemperatur oder gestufte Verbrennung, der $NO_x$-Gehalt verringert werden. Des weiteren können hinter der heißen Flamme bei Temperaturen von etwa 1000°C oder darunter Ammoniak oder N-haltige Verbindungen eingebracht werden, um auf diesem nichtkatalytischem Wege den $NO_x$-Gehalt zu senken. Eine weitere Möglichkeit stellt die heterogenkatalytische $NO_x$-Reduktion zu unbedenklichem Molekülstickstoff mit Hilfe von Ammoniak an Festbettkatalysatoren bei Temperaturen von 300 bis 400°C dar. Des weiteren läßt sich $NO_x$ auch bei Temperaturen unterhalb von etwa 100°C mit Lösungen von Eisen(+2)-EDTA oder anderen starken Komplexbildnern für Eisen entfernen. - Die Abkürzung EDTA steht hier für den Komplexbildner Ethylendiamintetraessigsäure (acetic acid). -

Als Oxidationsinhibitoren lassen sich grundsätzlich die bekannten Oxidationsinhibitoren einsetzen.

Als besonders gut wirksame Oxidationsinhibitoren haben sich für den vorliegenden Zweck Polyaminoaromaten, Polyhydroxiaromaten und (Poly)amino(poly)hydroxiaromaten erwiesen. Als Beispiele seien genannt: p-Phenylendiamin, o-Phenylendiamin, o-Toluidin, Hydrochinon und andere Dihydroxibenzole, Trihydroxibenzole, Gallussäure, 4-Aminophenol, 4-(Methylamino)-phenol sowie N-(2-Hydroxiethyl)-anilin. Selbstverständlich können diese Verbindungen, sofern eine ausreichende Wasserlöslichkeit noch gewährleistet ist, weitere Substituenten, wie z.B. Alkylgruppen, Halogene oder Sulfonsäuren aufweisen.

Weitere wirksame Oxidationsinhibitoren sind Ascorbinsäure, Erythorbinsäure und Dehydroascorbinsäure, die nicht zu den oben aufgezählten Verbindungsklassen gehören (vgl. JA-OS 80/109 210).

Das erfindungsgemäße Verfahren wird bei Temperaturen von 20 bis 90°C, vorzugsweise von 40 bis 70°C, durchgeführt. Es kann bei Normaldruck oder auch bei Überdruck betrieben werden. Die Konzentration der Sulfit/Hydrogensulfitlösung kann zwischen etwa 0,5 Gew.% und der Sättigung liegen.

Beispiele

Die folgenden Beispiele wurden in einer Laborwaschkolonne durchgeführt, bestehend aus einem Glasrohr mit einem Durchmesser von 50 mm, das mit einer 100 cm hohen Gewebepackung (Sulzer BX, 500 $m^2/m^3$) mit einer Kontaktfläche von 100 $dm^2$ gefüllt war. Durch diese Kolonne wurden von oben nach unten eine im Kreis geführten Waschflüssigkeit mit einer Strömungsrate von 7 1/h geleitet. Am Fuß der Kolonne wurde ein Modellrauchgas mit einer Strömungsrate von 1200 1/h eingeleitet und im Gegenstrom zu der Waschflüssigkeit geführt.

Die Waschflüssigkeit besaß eine Menge von 530 g und wies folgende zusammensetzung auf:

| | |
|---|---|
| $Na_2SO_3$ | 68 g/l |
| $NaHSO_3$ | 100 g/l |
| $Na_2SO_4$ | 85 g/l |

Der pH-Wert betrug 6,0 und wurde durch Zugabe von geringen Mengen an 25 gew.%iger Natronlauge konstant auf diesem Wert gehalten.

Das Rauchgas wies folgende Zusammensetzung auf:

$O_2$ : 7 Vol%

$H_2O$ : 8 - 9 Vol% bei 45°C

$NO_x$ : 0 - 2000 Vol ppm

$NO_x$ wurde mittels eines Infrarotabsorptionsgerätes als NO bestimmt, nachdem im Messgas vorliegenden $NO_2$ in einem der IR-Messzelle vorgeschalteten thermischen Konverter vollständig zu NO gespalten worden war.

SO$_2$ : 1000 Vol ppm

N$_2$ : Rest

Die Oxidationsinhibitoren wurden in Wasser bzw. im Falle der Amine in verdünnter Schwefelsäure gelöst und der Waschflüssigkeit kontinuierlich zudosiert.

Beispiele 1 -26

In den Beispielen 1 - 26 wurde als Inhibitor Ascorbinsäure mit Ausnahme der inhibitorfreien Vergleichsbeispiele 1, 6, 12, 18 und 23 eingesetzt.

Die in den folgenden Tabellen angegebenen Oxidationsraten wurden wie folgt berechnet:

$$\text{Oxidationsrate \%} = \frac{\text{Sulfatbildungsrate des Beispiels}}{\text{Sulfatbildungsrate des zugehörigen inhibitorfreien Beispiels}} \times 100$$

| Beispiel Nr. | 1 | 2 | 3 | 4 | 5 |
|---|---|---|---|---|---|
| NO$_x$-Konz. in Vol ppm | 100 | 100 | 100 | 100 | 100 |
| Inhibitordosierung in mmol/m$^2\cdot$h | 0 | 0,1 | 0,25 | 0,5 | 1,0 |
| Sulfatbildungsrate in g/h | 1,7 | 1,3 | 0,5 | 0,1 | 0,05 |
| Oxidationsrate % | 100 | 76,5 | 29 | 6 | 3 |
| Inhibitorkonz. Gew.% | - | 0,68 | 0,68 | 0,68 | 0,68 |

| Beispiel Nr. | 6 | 7 | 8 | 9 | 10 | 11 |
|---|---|---|---|---|---|---|
| NO$_x$-Konz. in Vol ppm | 300 | 300 | 300 | 300 | 300 | 300 |
| Inhibitordosierung in mmol/m$^2\cdot$h | 0 | 0,1 | 0,25 | 0,5 | 1,0 | 2 |
| Sulfatbildungsrate in g/h | 4 | 2,8 | 1,5 | 0,7 | 0,6 | 0,5 |
| Oxidationsrate % | 100 | 70 | 37,5 | 27,5 | 15 | 12 |
| Inhibitorkonz. Gew.% | - | 0,68 | 0,68 | 0,68 | 0,68 | 0,68 |

| Beispiel Nr. | 12 | 13 | 14 | 15 | 16 | 17 |
|---|---|---|---|---|---|---|
| NO$_x$-Konz. in Vol ppm | 550 | 550 | 550 | 550 | 550 | 550 |
| Inhibitordosierung in mmol/m$^2$·h | 0 | 0,25 | 0,5 | 1 | 2 | 4 |
| Sulfatbildungsrate in g/h | 5 | 4,2 | 3,7 | 1,3 | 0,6 | 0,1 |
| Oxidationsrate % | 100 | 84 | 74 | 26 | 12 | 2 |
| Inhibitorkonz. Gew.% | – | 1,7 | 1,7 | 1,7 | 1,7 | 1,7 |

| Beispiel Nr. | 18 | 19 | 20 | 21 | 22 |
|---|---|---|---|---|---|
| NO$_x$-Konz. in Vol ppm | 1000 | 1000 | 1000 | 1000 | 1000 |
| Inhibitordosierung in mmol/m$^2$·h | 0 | 0,5 | 1 | 2 | 4 |
| Sulfatbildüngsrate in g/h | 6,3 | 5 | 3,5 | 1,5 | 0,1 |
| Oxidationsrate % | 100 | 79 | 56 | 24 | 2 |
| Inhibitorkonz. Gew.% | – | 3,4 | 3,4 | 3,4 | 3,4 |

| Beispiel Nr. | 23 | 24 | 25 | 26 |
|---|---|---|---|---|
| NO$_x$-Konz. in Vol ppm | 2000 | 2000 | 2000 | 2000 |
| Inhibitordosierung in mmol/m$^2$·h | 0 | 1,5 | 3 | 6 |
| Sulfatbildungsrate in g/h | 8 | 5,6 | 3,2 | 1,4 |
| Oxidationsrate % | 100 | 70 | 40 | 17,5 |
| Inhibitorkonz. Gew.% | – | 10,2 | 10,2 | 10,2 |

Beispiele 27 - 32

In den Beispielen 27 - 32 wurde mit Ausnahme der inhibitorfreien Beispiele 27 und 30 als Inhibitor p-Phenylendiamin eingesetzt.

| Beispiel Nr. | 27 | 28 | 29 | 30 | 31 | 32 |
|---|---|---|---|---|---|---|
| $NO_x$-Konz. in Vol ppm | 100 | 100 | 100 | 550 | 550 | 550 |
| Inhibitordosierung in mmol/m²•h | 0 | 0,2 | 0,5 | 0 | 0,5 | 1 |
| Sulfatbildungsrate in g/h | 2,7 | 1,6 | 0,7 | 3,6 | 2,9 | 1,7 |
| Oxidationsrate % | 100 | 60 | 26 | 100 | 81 | 47 |
| Inhibitorkonz. Gew.% | - | 2,1 | 2,1 | - | 4,3 | 4,3 |

Beispiele 33 - 39

In den Beispielen 33 - 39 wurde mit Ausnahme der inhibitorfreien Beispiele 33 und 36 als Inhibitor p-Methylaminophenol, und zwar als schwefelsaures Salz eingesetzt.

| Beispiel Nr. | 33 | 34 | 35 | 36 | 37 | 38 |
|---|---|---|---|---|---|---|
| $NO_x$-Konz. in Vol ppm | 100 | 100 | 550 | 550 | 550 | 550 |
| Inhibitordosierung in mmol/m²•h | 0 | 0,1 | 0,4 | 0 | 0,5 | 1 |
| Sulfatbildungsrate in g/h | 2,8 | 0,7 | 0,4 | 6 | 1,1 | 0,7 |
| Oxidationsrate % | 100 | 25 | 14 | 100 | 18 | 12 |
| Inhibitorkonz. Gew.% | - | 2,72 | 2,72 | 2,72 | 2,72 | 2,72 |

Beispiele 39 - 45

| Wirkung einer kontinuierlichen Inhibitorzugabe in Abwesenheit von $NO_x$ | | | | | | | |
|---|---|---|---|---|---|---|---|
| a) Beispiele 39 bis 40 mit Ascorbinsäure<br>b) Beispiele 41 bis 43 mit Methylaminophenol<br>c) Beispiele 44 bis 45 mit p-Phenylendiamin | | | | | | | |
| Beispiel Nr. | 39 | 40 | 41 | 42 | 43 | 44 | 45 |
| $NO_x$-Konz. in Vol ppm | 0 | 0 | 0 | 0 | 0 | 0 | 0 |
| Inhibitordosierung in mmol/m²•h | 0 | 0,05 | 0 | 0,025 | 0,05 | 0 | 0,1 |
| Sulfatbildungsrate in g/h | 0,6 | 0,4 | 0,9 | 0,6 | 0,5 | 0,5 | 0,4 |
| Oxidationsrate % | 100 | 67 | 100 | 66 | 56 | 100 | 80 |
| Inhibitorkonz. Gew.% | - | 1,36 | - | 1,72 | 1,72 | - | 1,1 |

**Ansprüche**

1. Verfahren zur Verringerung der Oxidationsraten von sulfit/bisulfithaltigen Lösungen in Gasflüssigkeitswäschen zur $SO_2$-Abtrennung aus gegebenenfalls $NO_x$-haltigen Gasen unter Zugabe von Oxidationsinhibitoren, dadurch gekennzeichnet, daß man den sulfit-/hydrogensulfithaltigen Lösungen pro Quadratmeter Stoffaustauschfläche zwischen Gas und Flüssigkeit und pro Stunde 0,01 bis 20 mmol Oxidationsinhibitoren zusetzt.

2. Verfahren nach Anspruch 1, dadurch gekennzeichnet, daß man den $NO_x$-Gehalt des Gases vor der $SO_2$-Abtrennung verringert.

3. Verfahren nach Anspruch 1, dadurch gekennzeichnet, daß man als Oxidationsinhibitoren Polyaminoaromaten und/oder Polyhydroxyaromaten und/oder (Poly)amino(poly)hydroxiaromaten einsetzt.

4. Verfahren nach Anspruch 1, dadurch gekennzeichnet, daß man als Oxidationsinhibitor Ascorbinsäure und/oder Dehydroascorbinsäure einsetzt.

5. Verfahren nach Ansprüchen 1 bis 3, dadurch gekennzeichnet, daß man die Oxidationsinhibitoren kontinuierlich zugibt.

6. Verfahren nach Ansprüchen 1 bis 3, dadurch gekennzeichnet, daß man zusätzlich zu den Oxidationsinhibitoren Komplexbildner für Metalle zusetzt.

7. Verfahren nach Ansprüchen 1 bis 5, dadurch gekennzeichent, daß man in Abhängigkeit vom $NO_x$-Gehalt des Gases sulfit-/hydrogensulfithaltigen Lösungen den Oxidationsinhibitor in solchen Mengen zusetzt, die gemäß Figur durch die Schnittpunkte einer durch den $NO_x$-Gehalt auf der Ordinate zur Abszisse gezogenen parallelen Geraden mit den Kuren A und C, vorzugsweise mit den Kurven B und C, definierten Bereiche gegeben ist.

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 918 521 (E. SNAVELY)<br>* Ansprüche 1,2 * | 1-7 | B 01 D 53/34 |
| A | FR-A-2 105 753 (SUMITOMO CHEMICAL CO.)<br>* Beispiele; Ansprüche 1-6 * | 1-7 | |
| A | PATENT ABSTRACTS OF JAPAN, Band 4, Nr. 166 (C-31)[648], 18. November 1980;<br>& JP-A-55 109 210 (KURITA KOGYO) 22-08-1980<br>* Gesamte Zusammenfassung * | 1-7 | |
| D,A | US-A-3 888 969 (K. KAWAMOTO)<br>* Ansprüche 1-10 * | 1-7 | |

| RECHERCHIERTE SACHGEBIETE (Int. Cl.5) |
|---|
| B 01 D<br>C 01 B |

Der vorliegende Recherchenbericht wurde für alle Patentansprüche erstellt

| Recherchenort | Abschlußdatum der Recherche | Prüfer |
|---|---|---|
| Den Haag | 31 Oktober 90 | KANOLDT W.W. |